Europäisches Patentamt

European Patent Office

Office européen des brevets

(19)

(11) **EP 0 522 743 B1**

(12) **EUROPEAN PATENT SPECIFICATION**

(45) Date of publication and mention
of the grant of the patent:
**17.12.1997 Bulletin 1997/51**

(51) Int Cl.6: **H04L 29/06**, H04L 12/46

(21) Application number: **92305770.7**

(22) Date of filing: **24.06.1992**

(54) **Combined hash table and CAM address recognition in a network**

Tabelle mit gemischter Adressierung und Cam-Adresserkennung in einem Netzwerk

Table à adressage combiné et reconnaissance d'adresse cam dans un réseau

(84) Designated Contracting States:
**DE FR GB IT**

(30) Priority: **26.06.1991 US 721166**

(43) Date of publication of application:
**13.01.1993 Bulletin 1993/02**

(73) Proprietor: **DIGITAL EQUIPMENT CORPORATION**
**Maynard, MA 01754 (US)**

(72) Inventors:
  • **Jain, Rajendra Kumar**
    **Sudbury, Massachusetts 01776 (US)**
  • **Yang, Henry S.**
    **Andover, Massachusetts 01810 (US)**
  • **Hawe, William R.**
    **Pepperell, Massachusetts 01463 (US)**

(74) Representative: **Goodman, Christopher et al**
**Eric Potter & Clarkson**
**St. Mary's Court**
**St. Mary's Gate**
**Nottingham NG1 1LE (GB)**

(56) References cited:
**US-A- 4 922 503**

• ELECTRONICS. vol. 61, no. 18, December 1988,
  NEW YORK US pages 82 - 84 , XP46947
  B.C.COLE 'CONTENT-ADDRESSABLE
  MEMORIES CATCH ON'
• INFOCOM-91 April 1991, BAL HARBOUR, US
  pages 515 - 524 , XP223375 T.B.PEI ET AL 'VLSI
  IMPLEMENTATION OF ROUTING TABLES:
  TRIES AND CAMS'

**Description**

FIELD OF THE INVENTION:

This invention relates generally to data communication apparatus and method and, in particular, to apparatus and method enabling a local area network (LAN) station to efficiently recognize a received LAN address.

BACKGROUND OF THE INVENTION:

Background information useful to the understanding of and implementation of the present invention may be found in: American National Standard for Information Systems, Fiber Distributed Data Interface (FDDI) - Token Ring Media Access Control (MAC) ANSI X3. 139-1987; IEEE Standards for Local and Metropolitan Area Networks: Overview and Architecture, Std 802-1990; A Primer to FDDI: Fiber Distributed Data Interface, copyright 1991, Digital Equipment Corporation.

Reference is made to the following definitions.

Station: An addressable logical and physical attachment in a ring, capable of transmitting, receiving, and repeating information.

Ring: Two or more stations connected by a physical medium wherein information is passed sequentially between active stations, each station in turn examining or copying and repeating the information, finally returning the information to the originating station.

Media Access Control (MAC): A Data Link Layer responsible for the scheduling of data transmissions to and for receiving transmissions from a shared medium Local Area Network (e.g., an FDDI ring).

Token: A unique symbol stream that indicates the right to transmit on a shared medium. On a Token Ring, the Token circulates sequentially through the stations in the ring. At any time, it may be held by no stations or by one station.

Frame: A Protocol Data Unit (PDU) transmitted between cooperating MAC entities on a ring, including a starting delimiter, addresses, a variable number of data octets (eight ordered bits that form a pair of data symbols), and an ending delimiter.

Protocol Data Unit (PDU): A unit of data transfer between communicating peer layer entities which may contain control, address and data information. FDDI MAC PDUs are Tokens and Frames.

Receive: The action of a station in accepting a Token, Frame, or other symbol sequence from the incoming medium.

Transmit: The action of a station in generating a Token, Frame, or other symbol sequence and placing it on the outgoing medium.

Addresses: A set of 48-bit station addresses, which may be a station's unique address, a 48-bit Broadcast Address (all ones), and any other 48-bit Group Addresses recognized by a station.

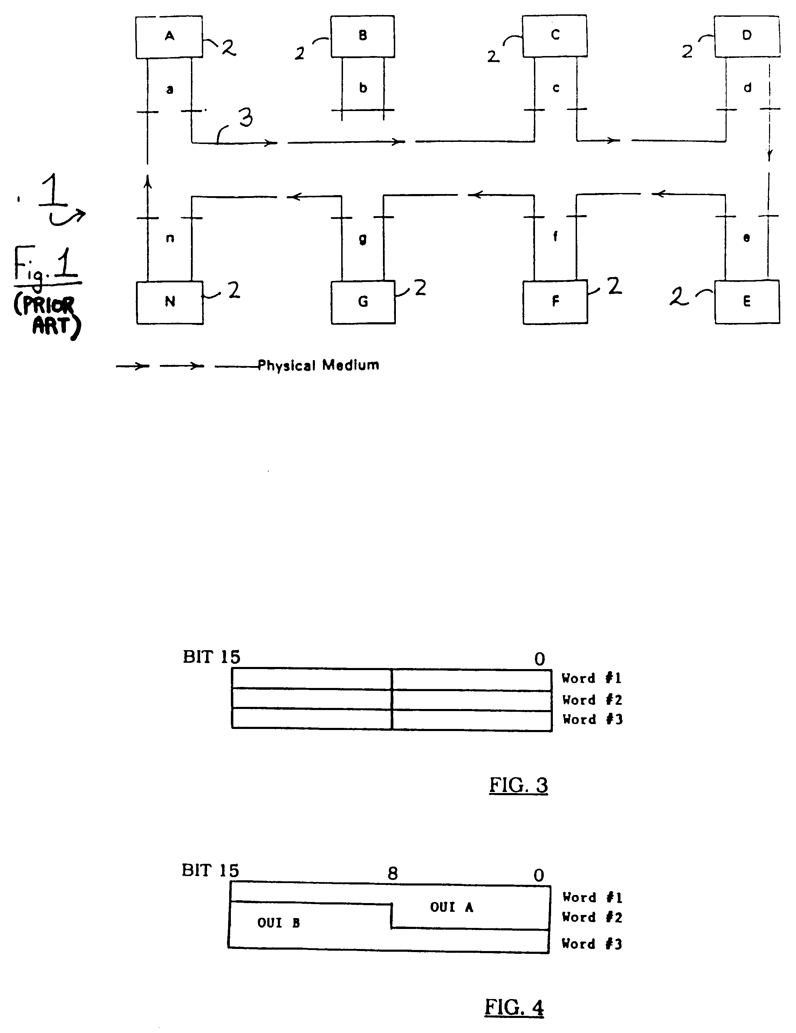

Fig. 1 is an exemplary embodiment of a specific network topology. It should be realized that the teaching of the invention also applies to a number of other network topologies, including Carrier Sense Multiple Access/Collision Detect (CSMA/CD) networks.

As seen in Fig. 1 a token ring 1 includes a set of stations 2 (designated A-N) that are serially connected by a transmission medium 3, such as an optical fiber, to form a closed loop. Information is transmitted sequentially, as a stream of bits, from one active station 2 to the next. Each station 2 generally regenerates and repeats each bit and serves as a means for attaching one or more devices to the ring for the purpose of communicating with other devices on the ring. A given station that has access to the medium 3 transmits information onto the ring, where the information circulates from one station to the next. The format of the circulating information includes a destination address, a source address, and a data field. In the IEEE 802 format, the first bit of the destination address specifies whether the destination address is an individual address or a group (multicast) address. That is, whether the destination address specifies the LAN address of a specific station or, in the case of a group address, the stations to which the associated data field is directed. An addressed destination station or stations copies the information as it passes. Eventually, the station that originally transmitted the information removes the information from the ring 1.

Each LAN address, as specified by the IEEE 802 standard, consists of 48 bits. Of these, the first, or most significant, 24 bits identify the organization owning the address. For example, all group addresses assigned to a given organization begin with the same 24 bits that uniquely identify the organization. These first 24 bits are referred to as an "Organizationally Unique Identifier" (OUI). In general, in any given LAN the number of OUIs is small. The remaining 24 bits, for an individual address, uniquely identify each of the stations for that organization that are coupled to the LAN.

On a token ring a Frame typically also includes a Frame Status field that contains an E-indicator, A-indicator and C-indicator. The E-indicator is used to indicate if the Frame has been detected to contain an error. The A-indicator is used to indicate if the destination address of the Frame has been matched by one or more stations 2 on the ring. The C-indicator is used to indicate if the Frame was received and copied by one or more stations 2 on the ring.

Each station 2 contains a Destination Address list. The Destination Address list contains a set of addresses that the station uses to compare with the Destination Address of each received Frame. If a match is found then the Frame is received and copied. On a token ring, if a match is found the station receives and copies the Frame and, in addition, sets the A-indicator and C-indicator when repeating the Frame. The Destination Address list contains the station's My Address and one or more Alias Addresses. An "alias address" is an address different from the station's individual address but used in a similar manner as the individual address. For example, an application may require that an alias address be used as a source address when transmitting Frames. Also the "alias address" may be used to compare with the destination address field of a Frame when receiving Frames.

A typical implementation of one of the stations 2 may have two individual addresses and 32 group addresses in the Destination Address list.

A problem arises as communication networks become larger and faster, and as addresses associated with stations increase in size. That is, a need has arisen to optimize a station address comparison function.

In general, datalink adapters coupled to a LAN are required to recognize destination addresses associated with Frames conveyed by the LAN. Many conventional network adapters have only one individual address, which may be easily recognized. However, in that each network station may also accept a number of group addresses, the adapter is also required to quickly determine whether to receive the group Frame. For example, for some token ring networks, e.g., FDDI, receiving stations are required to set an "Address Recognized" flag in the received Frame. For the smallest size Frames this implies that the address must be recognized within 11 octets, or 0.88 microseconds. This requirement places an upper bound on the time within which end stations must recognize group addresses. For example, bridges, which are used to interconnect two or more LANs, must recognize the destination addresses of every Frame and rapidly decide whether to receive the Frame for forwarding. Also, routers in wide area networks (WAN) typically must examine a large forwarding database to decide the output link for a given destination address.

Several high-speed networks simplify the problem of address lookup by using a hierarchical address format that allows the forwarding path to be looked up directly. Although this approach results in fast routing, the association of a destination's unique identifier (generally a 48-bit individual address) to the corresponding hierarchical address at the originating station still requires searching through a large address database.

One method to determine whether to accept the Frame of data is to employ a hardware lookup of the address in a list or a table of acceptable addresses. This is the approach taken in Content Addressable Memories (CAMs). One significant advantage of a CAM is that there is provided perfect address recognition. That is, given a network address the CAM determines with certainty whether the address is within a table of acceptable addresses. However, CAMs are highly gate-intensive and add significant complexity, power consumption, and consume a significant amount of surface area when implemented within an integrated circuit. Furthermore, the CAM search time increases as the number of addresses which must be recognized increases. With a trend towards a client-server form of distributed computing, the number of group addresses that a given station must receive is continuously increasing. As such, the practical limit of the CAM-approach to address recognition is quickly reached.

Another address recognition method employs a hash filter to map the received address into a bit mask. Hashing is generally performed in two steps. In the first step, an address A is converted to a hash value $f(A)$. In the second step, some m bits of $f(A)$ are extracted so that a total number of hash cells is $2^m$. The logic state of a predetermined bit in the mask indicates whether a given received address is to be accepted or rejected. One significant advantage of the hash approach is that the speed of hashing is independent of the number of addresses and is thus particularly suitable if the number of acceptable addresses is large. However, a disadvantage of hashing is that if the size of the bit mask is made small, so as to reduce the required circuitry, several addresses may map to the same bit. Thus, the hashing approach provides imperfect filtering of the received addresses.

In many LANs, the destination address is the first part of the Frame, and the Frame is passed through a cyclic redundancy check (CRC) circuit. As a result, it has been recognized that the bits of the CRC provide a mechanism for hashing. In that each network station may have a number of group addresses that are to be received by the station, the network adapter employs the CRC polynomial as a hash function to reject Frames associated with undesired group addresses.

In one hashing approach, described in a device specification entitled "MK68590 Local Area Network Controller for Ethernet" (United Technologies Mostek), a group address filter includes a 64 bit mask composed of four sixteen bit registers used to accept incoming group addresses. This is an imperfect filter that requires a host processor to perform final filtering. The first bit of the incoming address must be a "1" for either the Logical Address Filter or the Broadcast Address decode to be enabled. Otherwise the incoming address is an individual address and is compared against the contents of a 48 bit register.

All incoming data passes through a CRC Generator. In the case of a group address, the six most significant bits of the CRC Generator are strobed into the Hash Register after the 48th bit of the group address has passed through the CRC Generator. The six bits select one of the 64 bits in the Logical Address Filter such that Has Address 00 selects bit 0 and Hash Address 63 selects bit 63. If the selected mask bit is a "1", the address is accepted. However, different organizations can assign group addresses which may map to the same bit of the has mask, resulting in a collision.

Prior Art US Patent No. 4,922,503 teaches a bridge for interconnecting local area networks wherein the decision on whether or not to forward a frame is based on the destination address of the frame. A prefilter causes an abbreviated representation of the destination address of each frame and uses the representation to look into a global address table (GAT) memory. For destination addresses which are active on the remote local area network the prefilter allows the frames to be forwarded for further filtering by a software controlled processor. Otherwise, the frames are discarded.

Prior Art publication from INFOCOM 91, April 1991, Bal Harbour, US, at pages 515 to 524, entitled "VLSI Implementation of Routing Tables: Tries and CAMS", teaches the use of Content-Addressable Memory (CAM), table lookup, hashing and tries, as different tools for designing routing tables for communication networks.

What is not taught by the prior art, and what is thus an object of this invention to provide, is a network address recognition method and apparatus that combines the use of a CAM and a Hash filter, in conjunction with a careful allocation of group addresses, to provide perfect address recognition while minimizing a required amount of circuitry and complexity.

The apparatus and method of the invention described herein provide improved flexibility in assigning group addresses.

## SUMMARY OF THE INVENTION

The foregoing and other problems are overcome by a method and apparatus for comparing a first value to a second value to determine if the first value equals the second value. The invention in its broad form resides in an apparatus and method in a network, for recognizing an address as recited in claims 1 and 9 respectively. Described hereinafter is a method, for a network having a destination address comparator, of comparing a first value comprised of (n) bits to a second value to determine if the first value equals the second value, said method comprising the steps of: comparing a portion of the first value, the portion being comprised of (n - x) bits, to one or more values stored within a memory means for determining if the memory means has a stored value that corresponds to the portion of the second value; filtering the first value with a hash filter means for determining if the first value is recognized by the hash filter means; and declaring that the first value equals the second value only if it is determined that (a) the memory means has a stored value that equals the portion of the first value and that (b) the first value is recognized by the hash filter means.

Preferably, the first value is represented by (n) address bits received from a communication network, such as a Token ring LAN.

As described herein, an address comparator includes circuitry for storing the received address and for applying all or a portion of the stored address to a CAM containing entries storing one or more target addresses. The address comparator also includes a Hash filter for filtering the first value for determining if the first value is recognized by a Hash mask. The received address is applied to a hash function generator, such as a CRC generator, and a plurality of the resultant bits, for example nine, are used to access the Hash mask. The address comparator further includes a programmable control circuitry for indicating that the received address equals the target address if (a) the CAM has an entry that equals all or a portion (OUI) of the received address and/or if (b) the bits from the hash function generator, resulting from the received address, are recognized by the Hash filter. In a presently preferred embodiment of the invention the hash function generator includes a CRC generator. A technique is also disclosed for correcting the CRC for bits that arrive before the destination address.

## BRIEF DESCRIPTION OF THE DRAWING

A more detailed understanding of the invention may be had from the following description of a preferred embodiment, given by way of example and to be understood in conjuction with the accompanying drawing wherein:

Fig. 1 schematically depicts a token ring network;

Fig. 2a is a simplified block diagram showing the combined CAM/Hash filter used to recognize network addresses;

Fig. 2b is a block diagram showing in greater detail the CRC Correction block of Fig. 2a; and

Figs. 3 and 4 illustrate address storage formats for a 4B bit address and for two Organizationally Unique Identifiers, respectively.

## DETAILED DESCRIPTION OF THE INVENTION

The ensuing description of a preferred embodiment of the invention is made in the context of a FDDI token ring data communications network that conforms to the ANSI and IEEE 802 standard. It should be realized, however, that

EP 0 522 743 B1

the teaching of the invention is applicable to other networks and standards, such as CSMA/CD, OSI, and TCP/IP networks. In general, the teaching of the invention is applicable to any network that operates in accordance with IEEE 802 address formats, including, by example, IEEE 802.3, IEEE 802.5, etc..

In this regard reference is made to the following documents: ANSI/IEEE Std. 802.3-1985, "Carrier Sense Multiple Access with Collision Detection (CSMA/CD) Access Method and Physical Layer Specifications", Institute of Electrical and Electronic Engineers; ANSI/IEEE Std. 802.5-1989, "Token Ring Access Method and Physical Layer Specifications", Institute of Electrical and Electronic Engineers; Postel, J., Ed. "Internet Protocol Specification", SRI International, Menlo Park, CA, Sept. 1981 RFC-791; Postel, J., Ed. "Transmission Control Protocol Specification", SRI International, Menlo Park, CA, Sept. 1981, RFC-793; and Information Processing Systems - Open Systems Interconnection (OSI) - Basic Reference Model, International Organization for Standardization, Oct. 1984, Draft International Standard 7498.

Furthermore, and as will be made apparent below, it should be realized that the teaching of the invention applies in general to the decoding of information that is expressed in a digital format.

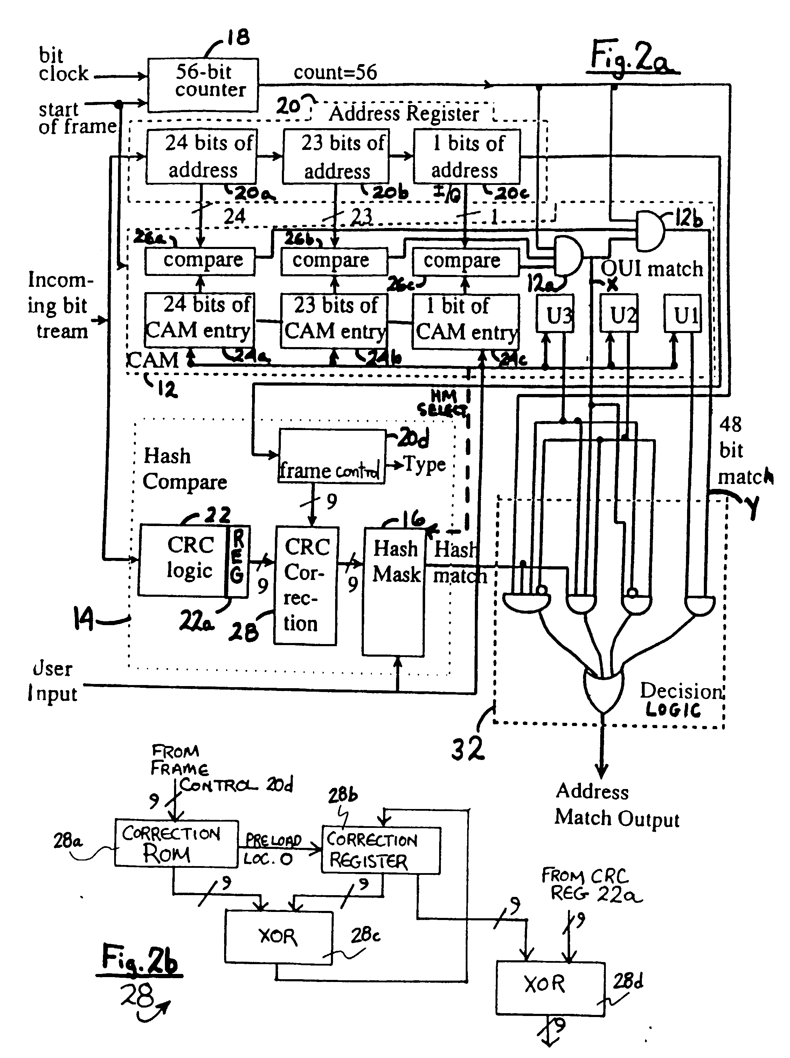

In recognition of the fact that there are generally but a few OUIs associated with a given LAN, and referring to block diagram of Fig. 2a, the invention employs an address filter 10 having a CAM 12 that recognizes the OUI portion of the LAN address. The CAM 12 thus confirms whether a specific network address has been assigned to an organization associated with the station 2 that includes the address filter 10. In parallel with the operation of the CAM 12, the invention employs a hash filter 14. This combination of CAM lookup and hash filtering results in perfect filtering of network addresses, provided that the addresses are assigned such that collisions cannot occur. That is, perfect filtering is achieved so long as no more than one address hashes to any given bit in a hash mask 16. Alternately, given a set of addresses, the teaching of the invention enables the selection of a hash function that eliminates or minimizes the occurrence of hashing collisions.

By careful address allocation perfect filtering can be achieved. Careful address allocation entails selecting an address, hashing the selected address, and determining if a collision occurs. If collision occurs another address is selected and the process repeated.

It should be noted that in Fig. 2a a signal line designated USER INPUT is coupled to a plurality of circuit blocks. This signal line indicates a data path through which a user programs values into certain of the logic blocks, as will be described.

The incoming bit stream from the LAN 1 is routed in parallel to an address register 20, that includes serially connected registers 20a, 20b, and 20c, and to CRC logic 22.

A bit counter 18 is connected to a bit clock and is enabled to count the bit clocks by a "start of frame" signal. The counter 18 is used to give an indication of the arrival of the last bit of the destination address. For example, in FDDI the counter 18 counts the bit clocks until it reaches a count of 56. This indicates a condition wherein 56 bits have been received from the LAN 1. The first eight bits of the Frame, which indicate Frame control information, are stored in an eight bit Frame control register 20d that has an input serially coupled to an output of address register 20c. The next 48 bits, indicating the destination address for the Frame, are stored in the address registers 20a-20c. The first bit of the 48 bits is stored in the 1-bit register 20c and indicates whether the address is an individual or a group address. This bit is referred to as an I/G bit. The remaining 47 address bits are stored in address registers 20a and 20b.

The CAM 12 includes a plurality of entries, for example four, only one of which is shown in Fig. 2a. The CAM entry is comprised of three registers: a 24 bit CAM entry 24a, a 23 bit CAM entry 24b, and a one bit CAM entry 24c. Each register of the CAM entry has an output coupled to an input of an associated comparator 26a, 26b, and 26c. The other comparator input is coupled to the associated 24 bit, 23 bit or one bit address register 20a-20c, respectively.

There are two output signal lines from the CAM 12. Depending upon the state of mode control registers associated with the CAM entries, the first output (x) indicates whether the received address matches the first 24 bits, the OUI address portion, of any CAM entry. The second output (y) indicates whether the address matches all 4B bits of any CAM entry.

Specifically, the (x) output is sourced from a gate 12a having as inputs the output of bit counter 18 and the outputs of comparators 26b and 26c. Gate 12a asserts an enabling output when, after the reception of 56 bits, the first 24 bits of the CAM entry equal the 24 bits of the address stored in address registers 20b and 20c. The output (y) is sourced from a gate 12b having as inputs the output of gate 12a and comparator 26a. The output of gate 12b is asserted when, after the reception of 56 bits, the first 24 bits of the CAM entry equal the 24 bits of the address stored in address registers 20b and 20c, as indicated by the output of gate 12a, and also the 24 bits of CAM entry 24a equal the 24 bits in address register 20a.

As was previously stated, only one CAM entry is shown in Fig. 2a. Typically, each of the plurality of CAM entries includes 48 bits of CAM entry 24a-24c, associated comparators 26a-26c and decoding gates. The mode control registers U1, U2 and U3 are associated modes for the matching CAM entry. After the destination address has been received fully the destination address is compared to all of the CAM entries in parallel so as to determine if one of the plurality of CAM entries matches the received address.

Further in accordance with the invention a hashing function generator is supplied to operate upon the received bit

5

stream. In a presently preferred embodiment of the invention the hashing function generator is a CRC generator, although the teaching of the invention is not limited to only the use of a CRC technique. For example, the hash function generator may employ specific bits of the destination address, a correlation of address bits, checksums, or XOR folding. A description of these various techniques is made in a technical report entitled "A Comparison of Hashing Schemes for Address Lookup in Computer Networks", DEC-TR-593, by R. Jain (1989), which is available from the Digital Equipment Corporation, Littleton, MA 01460.

The CRC logic 22 performs a 32-bit Cyclic Redundancy Check (CRC) of the first 56 bits. By removing the effect of the first eight bits, that is, the Frame control field stored in register 20d, the CRC for the destination address is obtained. Only the first few bits of the CRC, for example nine bits, are used in hashing. The effect of the Frame control field is removed by CRC correction logic 28. Provided with the Frame control field from register 20d the CRC correction logic 28 determines the quantity to be exclusive-ored with the output of the CRC logic 22 to obtain only the CRC for the received address. The corrected nine bits of CRC are used as an index into a hash mask which, in a presently preferred embodiment of the invention, is a 512-bit hash mask 16 comprised of, by example only, 32 16-bit registers HM00-HM31.

For embodiments of the invention not having a Frame control field before the destination address no correction of the hashing function may be required. Furthermore, for embodiments of the invention that employ other than a CRC technique, and that require hash function correction, the correction mechanism is selected in accordance with the hash function.

As seen in Fig. 2b the CRC correction logic 28 includes, in a presently preferred embodiment of the invention, a read only memory (ROM) 28a that stores a set of nine (ROM locations 0-8) n-bit numbers, wherein n equals the number of bits of CRC that are used to index the $2^n$ hash mask 16. ROM 28a has address inputs coupled to the frame control register 20d. The CRC correction logic 28 also includes an n-bit correction register 28b which is initialized with the contents of the 0th ROM location. In operation, the content of the ith ROM 28a location is exclusive-or'ed with logic 28c to the correction register 28b if and only if the ith bit in the frame control register 20d is set. This operation may occur as the frame-type bits are received from the LAN and well before the final bit of the destination address is received. After the last bit of the destination address has been received the content of the correction register 28b and the CRC register 22a are exclusive-or'ed through logic 28d to produce the n-bit index into the hash mask 16.

In accordance with a preferred embodiment of the invention a set of nine 32-bit correction values, expressed in hexadecimal notation, is as follows:

| | |
|---|---|
| 0 | BB-7E-75-34 |
| 1 | 2D-D0-EE-65 |
| 2 | 94-88-F9-E9 |
| 3 | C8-24-F2-2F |
| 4 | E6-72-F7-CC |
| 5 | 73-39-7B-E6 |
| 6 | 39-9C-BD-F3 |
| 7 | 9E-AE-D0-22 |
| 8 | 4F-57-68-11 |

Only those bits that are used to form the index into the hash mask need to be stored in the ROM 28a. For example, for a nine-bit implementation the ROM 28a contains the following:

| ROM 28a Location | Content |
|---|---|
| 0 | 10111011-0 |
| 1 | 00101101-1 |
| 2 | 10010100-1 |
| 3 | 11001000-0 |
| 4 | 11100110-0 |
| 5 | 01110011-0 |
| 6 | 00111001-1 |
| 7 | 10011110-1 |
| 8 | 01001111-0 |

These are the first nine bits of the 32-bit correction values shown previously and are obtained by evaluating the expression:

$$\text{mod}[\, x^{(88-i)}, g(x) \,],$$

by setting i=1, 2, ..., 8, where the cyclic redundancy check polynomial is g(x).

The content of the 0th ROM 28a location is

$$\text{mod}[\, (x^{56} + x^{48})\, l(x), g(x)].$$

In this expression l(x) is a polynomial of degree 31 with all coefficients equal to one.

As an example, the received frame control is 01010000, which is a Logical Link Control (LLC) frame of priority 0 (lowest asynchronous priority). The frame control information is stored within the frame control register 20d.

After the frame control is received, the computation of the correction factor is begun. In that the second and fourth bits in the frame control are set, ROM locations 0, 2, and 4 are exclusive-or'ed as follows.

```
       0          10111011-0
       2          10010100-1
       4          11100110-0
  result          11001001-1
```

It will be remembered that the correction register 28b was initialized to the content of ROM 28a location zero. The result is stored in correction register 28b.

After 56 bits of the frame are received (i.e., the last bit of the destination address), the CRC register 22a contains:
10101110-01011100-10111000-00000110

Employing logic 28d to exclusive-or the first 9-bits of the CRC register 22a with the correction factor stored in correction register 28b there is obtained:

```
                  10101110-0
                  11001001-1
  result          01100111-1
```

The 9-bit index into the hash mask 16 is thus 1-11100110, or 486.

If an 8-bit index is desired instead of a 9-bit index, it is preferred to use bits 2 through 9 (rather than bits 1 through 9). The 8-bit index using these bits would be 1-1110011, or 243.

Having thus described a presently preferred embodiment of the CRC correction logic 28, the discussion of the remainder of Fig. 2a will now be continued.

The user specifies acceptable address match patterns by programming, for each CAM entry, the associated mode control registers U1, U2 and U3. This programming is accomplished in accordance with the following Table.

| U1 | U2 | U3 | |
|---|---|---|---|
| 48-bit control | OUI control | Hash-mask control | Resulting mode |
| N | N | Y | Accept all Frames having Hash mask comparison only |
| N | Y | N | All Frames having OUI match are accepted |
| N | Y | Y | All Frames having OUI match *and* Hash are accepted |
| Y | N | N | Full 48-bit match (Normal CAM Mode) |
| Y | N | Y | Full 48-bit match *or* Hash mask comparison |
| Y | Y | N | Full 48-bit match *or* OUI match |
| Y | Y | Y | Full 48-bit *or* (OUI Match *and* Hash mask match) |

(continued)

| U1 | U2 | U3 | |
|---|---|---|---|
| 48-bit control | OUI control | Hash-mask control | Resulting mode |
| N | N | N | None |

A Decision Logic Block 32 includes gates connected as shown and decodes the output of Counter 18, the outputs A and B of the CAM 12, the outputs of mode registers U1, U2, and U3, and the output of the Hash Mask 16 so as to provide a signal designated ADDRESS MATCH OUTPUT. ADDRESS MATCH OUTPUT is asserted if the received address is accepted, otherwise ADDRESS MATCH OUTPUT is deasserted. Other circuitry, not shown, receives the ADDRESS MATCH OUTPUT signal and performs further MAC functions.

It should be noted that 48-bit or OUI-match user choices are per-CAM entry choices, whereas the hash match choice applies globally to all CAM entries. For example, a user may specify two OUI's: one to be accepted unconditionally while the other is to be accepted only if the corresponding hash-bit is also set.

Another mode of use employs a plurality of the hash masks 16, with the user specifying a specific hash mask number for use with each CAM 12 OUI. For this embodiment, and by example, four 128-bit hash masks are provided. A first CAM entry is associated with a first hash mask, a second CAM entry is associated with a second hash mask etc. An OUI match with a particular one of the CAM entries selects the corresponding hash mask to be used for the hash filter. The dashed line shown in Fig. 2a indicates a hash mask select input from the CAM 12.

Although the hash technique may used for both individual and group addresses, it is most effective if used only for group addresses. This is because the group address assignments may be readily controlled to avoid all hash collisions, while individual address assignments are not normally as readily controlled. The output signal line from the 1-bit register, the I/G bit, is depicted to show a preference that the hash mask be used only for group addresses. This signal line is not required if individual addresses are also to be recognized using the hash mask.

In summary, an embodiment of the invention includes for each of a plurality, for example four, of addresses (ADDRESS 1-ADDRESS 4), a set of mode control registers (U1-U3), a set of address registers (20a-20c), and a set of CAM entry registers 24a-24c and associated supporting circuitry, including the comparators 26a-26c. The hashing function for all address entries is accomplished with the CRC logic 22, the CRC correction logic 28, and the Hash mask 16. The address size used is 48 bits, which includes the 24 bit OUI. Filtering of addresses is accomplished with a 512 bit hash function indexed by nine bits of the corrected CRC.

A feature of the invention is the use of a 48-bit CAM entry to store two 24-bit OUIs, referred to herein as OUI A and OUI B. The CAM 12 register format for OUI A and OUI B are shown in Fig. 4, where Word #1, bit #0 is the I/G bit for OUI A, and where Word #2, bit #8 is the I/G bit for OUI B. It should be noted that other than 16-bit words may be employed.

Each of the Mode Control Registers (U1-U3 for each CAM entry) provides the ability to select one of the following modes:

1. Disable;
2. Enable Perfect Address;
3. Enable OUI and Hash; or
4. Enable OUI only.

If the selection is Enable OUI and Hash, or is Enable OUI only, then the following conditions are possible:

1. OUI A is Valid;
2. OUI B is Valid;
3. OUI A and OUI B are Valid.

That is, each of the CAM 12 address registers 20a-20c contains the following information for each of a plurality of separate cases.

| CASE | MODE CONTROL REGISTER | ADDRESS REGISTER |
|---|---|---|
| 1. | Disable | don't care |
| 2. | Enable Perfect Address | Contains a 48 bit address |
| 3. | Enable OUI and Hash | Contains up to two OUI's (OUI A and B) |
| 4. | Enable OUI Only | Contains up to two OUI's '(OUI A and B) |

The CAM 12 register format for the 48 bit address is shown in Fig. 3, where a 48 bit address is shown as three 16-bit words. Word #1, bit #0 is the I/G (Individual/Group) bit which is the first bit of the address that is transmitted and received. Word #3, bit 15 is the last address bit transmitted and received. Bit order for transmit/receive is Word #1, bit #0 to bit #15, Word #2, bit #0 to bit #15, and Word #3, bit #0 to bit #15.

An exemplary set-up mode for a Frame receive operation is as follows.

| STEP | ACTION |
|---|---|
| 1. | Address register 1 is written with address X1. |
| 2. | Address register 2 is written with address X2. |
| 3. | Address register 3 is written with OUI Y1 and OUI Y2. |
| 4. | Address register 4 is written with OUI Y3 as OUI A. |
| 5. | The Hash Function is written to the Hash mask 16 with Z (512 bits). |
| 6. | Mode Control Register 1 is written with Enable Perfect Address. |
| 7. | Mode Control Register 2 is written with Enable Perfect Address. |
| 8. | Mode Control Register 3 is written with Enable OUI and Hash, OUI A is Valid, and OUI B is Valid. |
| 9. | Mode Control Register 4 is written with Enable OUI Only, and OUI A is Valid. |

The programming of the mode registers as set forth above enables the station 2 to recognize the following Frames.

1. Frames with a destination address equal to X1 or X2.
2. Frames with OUI Y3 or OUI Y2 and with a hash function matching Z.
3. Frames with the OUI Y3.

As was stated previously, a number of possible address hashing approaches may be employed in the practice of the invention, including hashing using checksums and hashing using XOR folding. An analysis of the several contending address hashing techniques in the aforementioned technical report entitled "A Comparison of Hashing Schemes for Address Lookup in Computer Networks", DEC-TR-593, by R. Jain (1989), shows that the CRC of the address provides an excellent hashing function. This approach is summarized below.

Given a 48 bit address $\{a_0, a_1, a_2, ..., a_{47}\}$, the 32-bit CRC of the address can be computed by forming the following polynomial:

$$a(x) = \sum_{i=0}^{31} \bar{a}_i x^{47-i} + \sum_{i=32}^{47} a_i x^{47-i} \qquad (1)$$

and computing the remainder when the polynomial $(a(x))x^{32}$ is divided by the following CRC polynomial (as employed in IEEE 802 protocols):

$$g(x) = x^{32} + x^{26} + x^{23} + x^{22} + x^{16} + x^{12} + x^{11} +$$
$$x^{10} + x^8 + x^7 + x^5 + x^4 + x^2 + x + 1 \qquad (2)$$

The coefficient of the remainder polynomial is used as the hashing function. It should be noted in Equation (1) that the first 32 bits of the address are complemented. Although the algebraic description of CRC computation, as presented above, appears complex, the hardware implementation of the technique through the use of shift registers is straightforward.

The size of the hash mask 16 required to obtain a desired level of performance is a function of several competing factors. For example, it is assumed that the hash filter includes a simple M x 1 bit mask, that is, each hash mask cell is one bit wide. A hash function is used to map the LAN 1 address to an index value i in the range 0 through M-1. If the ith bit in the hash mask 16 is set, the Frame is accepted for further processing; otherwise, the Frame is rejected. Such a hash filter is a perfect rejection filter in the sense that if the mask bit is zero, it is determined with certainty that the LAN address is not wanted. On the other hand, the hash filter is an imperfect acceptance filter in the sense that when the mask bit is one, there is some probability that the LAN address is not one of those wanted by the station. This is because more than one LAN address can hash to the same mask location.

In accordance with an aspect of the invention (n) bits from the LAN address CRC are employed as an index into a $2^n$ bit hash mask 16 and provides a collision-free hash filter 14. In general, it has been determined that a $2^n$ bit mask is suitable for use with an organization that assigns one-tenth as many $[2^n /10]$ local LAN addresses. Thus, for eight bits of LAN address CRC the resulting hash table is $2^8$, or 256 bits, in length, for nine bits of LAN address CRC the resulting hash table is $2^9$, or 512 bits, in length. In the presently preferred embodiment of the invention the hash mask is embodied within the 32 16-bit registers (HM00 - HM31).

The combined CAM and hash filter 10 enables significant savings in circuitry, complexity and power consumption. As an example, for recognizing 32 group addresses assigned to a user, a 512 bit hash mask using nine bits of CRC was found to provide a collision-free hash filter. This hash mask, combined with three 24-bit one entry CAMs, was sufficient to perfectly recognize all user-assigned group addresses at an organization. However, a 32 entry (48 bits per entry) CAM would require, at a minimum, (32 X 48) or 1536 bits of storage, including numerous associated comparators.

The teaching of the invention is not intended to be construed to be limited to the specific embodiment disclosed herein. For example, addresses having more or less than 48 bits may be recognized, more or less than four CAM 12 entries may be employed, registers may be organized to have more or less than 16-bits, and the hash mask may comprise more or less than 512 bits. Furthermore, the functionality of the address filter 10 may be realized with discrete circuits, a single integrated circuit, a programmed data processor, or a combination of such components. Also, the teaching of the invention is not restricted for use with any one particular network embodiment. For example, the invention may also be used with non-token ring networks such as IEEE 802.3 and IEEE 802.4.

Thus, while the invention has been particularly shown and described with respect to a preferred embodiment thereof, it will be understood by those skilled in the art that changes in form and details may be made therein without departing from the scope of the invention, as defined by the appended claims.

## Claims

1. Apparatus for recognizing an address received from a communication network (1), comprising :

   means (20) for storing the received address;
   content addressable memory means (12) having entries (24) for storing one or more target addresses;
   means (26) for comparing the stored received address or at least a portion thereof to the one or more stored target addresses or corresponding portions thereof, the comparing means having an output for indicating if a match occurs between the stored received address or portion thereof and one of the stored target addresses, or a corresponding portion thereof;
   means (16) for storing a hash mask comprised of a plurality of bits, a predetermined one or ones of the bits being set to correspond to one or more target addresses, the hash mask storing means (16) having an input and further having an output for indicating if a value applied at the input is recognised;
   means (22) for generating a cyclical redundancy check CRC value or other hash function value corresponding to the received address, a portion of the CRC or other hash function value being applied to the input of the hash mask storing means; and
   control means (32) for selecting the output of the comparing means and/or the output of the hash mask storing means for indicating if the stored received address equals a target address.

2. Apparatus as set forth in claim 1 and further including counting means (18) coupled to the communication network for counting a number of bits received therefrom, the counting means having an output that is asserted after a predetermined number of bits is received, the counting means output being coupled to the control means for enabling the operation thereof.

3. Apparatus as set forth in claim 2 wherein the predetermined number of bits equals 56.

4. Apparatus as set forth in claim 1 and further including means (28), coupled to an output of the CRC generating means (22), for correcting the output of the CRC generating means for other information received from the communications network that does not form a part of the address.

5. Apparatus as set forth in claim 4 wherein the correcting means (28) includes data storage means (28a) for storing a plurality of correction factors, the storing means having an output coupled to means for combining one or more of the correction factors together so as to form a final correction factor for combining with the output of said CRC generating means.

6. Apparatus as set forth in claim 5 wherein the data storage means (28a) has nine storage locations (0-8) each of which stores all of or a subset of the following correction factors :

| 0 | BB-7E-75-34 |
|---|-------------|
| 1 | 2S-DO-EE-65 |
| 2 | 2D-DO-EE-65 |
| 3 | C8-24-F2-2F |
| 4 | E6-72-F7-CC |
| 5 | 73-39-7B-E6 |
| 6 | 39-9C-BD-F3 |
| 7 | 9E-AE-D0-22 |
| 8 | 4F-57-68-11 |

7. Apparatus as set forth in claim 6 wherein said combining means includes an exclusive-or logic function.

8. Apparatus as set forth in claim 1 wherein each of the entries (24) is partitioned into three fields, a first field (24a) having 24 bits, a second field (24b) having 23 bits, and a third field (24c) having one bit, and wherein the third field stores an address bit that indicates if the network address is an individual address or a group address.

9. A method of filtering addresses received from a communication network (1) by a network station to determine if a received address identifies the network station, comprising the steps of:

applying an address received from the communication network to a content addressable memory CAM (12) having at least one entry (24) to determine if the CAM has a matching address stored within the at least one entry;
comparing the received address or at least a portion thereof with one or more target addresses or corresponding portions thereof stored in the content addressable memory (12) to determine if a match occurs;
generating a hash function value corresponding to the received address and applying a portion of the hash function value to a stored hash mask comprising a plurality of bits, a predetermined one or ones of those bits being set to correspond to one or more target addresses; and
determining if the address identifies the network station in accordance with one of the following criteria :

a) only if the hash mask (16) has a bit set that corresponds to the network address;
b) only if an organizationally unique identifier (OUI) portion of the received network address is determined to equal a first value comprised of "n" bits of a CAM entry;
c) only if the OUI portion of the received network address is determined to equal a CAM entry (24), and if the hash mask has a bit set that corresponds to the network address;
d) only if the network address, including the OUI portion, is determined to equal a CAM entry;
e) only if the network address, including the OUI portion, is determined to equal a CAM entry, or if the hash mask has a bit set that corresponds to the network address;
f) only if the network address, including the OUI portion, is determined to equal a CAM entry, or if the OUI portion of the received network address is determined to equal a CAM entry; and
g) only if the network address, including the OUI portion, is determined to equal a CAM entry, or if the OUI portion of the received network address is determined to equal a CAM entry and if the hash mask also has a bit set that corresponds to the network address.

## Patentansprüche

1. Vorrichtung zum Erkennen einer von einem Kommunikationsnetz (1) empfangenen Adresse, wobei die Vorrichtung folgendes aufweist:

eine Einrichtung (20) zum Speichern der empfangenen Adresse;
eine inhaltsadressierbare Speichereinrichtung (12) mit Eintragsstellen (24) zum Speichern einer oder mehrerer Zieladressen;
eine Einrichtung (26) zum Vergleichen der gespeicherten empfangenen Adresse oder wenigstens eines Teils davon mit der einen oder den mehreren gespeicherten Zieladressen oder entsprechenden Teilen davon, wobei die Vergleichseinrichtung einen Ausgang hat, um anzuzeigen, ob eine Übereinstimmung zwischen der gespeicherten empfangenen Adresse oder einem Teil davon und einer der gespeicherten Zieladressen oder eines entsprechenden Teils davon auftritt;

eine Einrichtung (16) zum Speichern einer Hash- bzw. Prüfmaske, die aus einer Vielzahl von Bits besteht, wobei eines oder mehrere vorbestimmte der Bits derart eingestellt werden, daß sie einer oder mehreren Zieladressen entsprechen, wobei die Hashmasken-Speichereinrichtung (16) einen Eingang hat, und weiterhin einen Ausgang hat, um anzuzeigen, ob ein an den Eingang angelegter Wert erkannt wird;

eine Einrichtung (22) zum Erzeugen eines Wertes für eine zyklische Redundanzprüfung CRC oder eines anderen Hashfunktions-Wertes entsprechend der empfangenen Adresse, wobei ein Teil des CRC- oder des anderen Hashfunktions-Wertes an den Eingang der Hashmasken-Speichereinrichtung angelegt wird; und

eine Steuereinrichtung (32) zum Auswählen des Ausgangssignals der Vergleichseinrichtung und/oder des Ausgangssignals der Hashmasken-Speichereinrichtung, um anzuzeigen, ob die gespeicherte empfangene Adresse gleich einer Zieladresse ist.

2. Vorrichtung nach Anspruch 1, die weiterhin eine Zähleinrichtung (18) enthält, die mit dem Kommunikationsnetz gekoppelt ist, zum Zählen einer Anzahl von daraus empfangenen Bits, wobei die Zähleinrichtung einen Ausgang hat, der nach dem Empfang einer vorbestimmten Anzahl von Bits aktiviert wird, wobei der Zähleinrichtungsausgang mit der Steuereinrichtung gekoppelt ist, um ihren Betrieb zu ermöglichen.

3. Vorrichtung nach Anspruch 2, wobei die vorbestimmte Anzahl von Bits gleich 56 ist.

4. Vorrichtung nach Anspruch 1, die weiterhin eine Einrichtung (28) enthält, die mit einem Ausgang der CRC-Erzeugungseinrichtung (22) gekoppelt ist, zum Korrigieren des Ausgangssignals der CRC-Erzeugungseinrichtung für andere vom Kommunikationsnetz empfangene Informationen, die keinen Teil der Adresse bilden.

5. Vorrichtung nach Anspruch 4, wobei die Korrektureinrichtung (28) eine Datenspeichereinrichtung (28a) enthält, um eine Vielzahl von Korrekturfaktoren zu speichern, wobei die Speichereinrichtung einen Ausgang hat, der mit einer Einrichtung zum miteinander Kombinieren eines oder mehrerer der Korrekturfaktoren gekoppelt ist, um einen Endkorrekturfaktor zum Kombinieren mit dem Ausgangssignal der CRC-Erzeugungseinrichtung zu bilden.

6. Vorrichtung nach Anspruch 5, wobei die Datenspeichereinrichtung (28a) neun Speicherstellen (0-8) hat, die jeweils alle oder eine Untergruppe der folgenden Korrekturfaktoren speichern:

| 0 | BB-7E-75-34 |
|---|---|
| 1 | 2S-DO-EE-65 |
| 2 | 2D-DO-EE-65 |
| 3 | C8-24-F2-2F |
| 4 | E6-72-F7-CC |
| 5 | 73-39-7B-E6 |
| 6 | 39-9C-BD-F3 |
| 7 | 9E-AE-DO-22 |
| 8 | 4F-57-68-11 |

7. Vorrichtung nach Anspruch 6, wobei die Kombinationseinrichtung eine Exklusiv-ODER-Logikfunktion enthält.

8. Vorrichtung nach Anspruch 1, wobei jede der Eintragsstellen (24) in drei Felder aufgeteilt ist, und zwar in ein erstes Feld (24a) mit 24 Bits, ein zweites Feld (24b) mit 23 Bits und ein drittes Feld (24c) mit einem Bit, und wobei das dritte Feld ein Adressenbit speichert, das anzeigt, ob die Netzadresse eine einzelne Adresse oder eine Gruppenadresse ist.

9. Verfahren zum Filtern von von einem Kommunikationsnetz (1) durch eine Netzstation empfangenen Adressen, um zu bestimmen, ob eine empfangene Adresse die Netzstation identifiziert, wobei das Verfahren die folgenden Schritte aufweist:

Anlegen einer vom Kommunikationsnetz empfangenen Adresse an einen inhaltsadressierbaren Speicher CAM (12) mit wenigstens einer Eintragsstelle (24), um zu bestimmen, ob der CAM eine übereinstimmende Adresse hat, die in der wenigstens einen Eintragsstelle gespeichert ist;

Vergleichen der empfangenen Adresse oder wenigstens eines Teils davon mit einer oder mehreren Zieladressen oder entsprechenden Teilen davon, die im inhaltsadressierbaren Speicher (12) gespeichert sind, um zu bestimmen, ob eine Übereinstimmung auftritt;

Erzeugen eines Hashfunktions-Wertes entsprechend der empfangenen Adresse und Anwenden eines Teils des Hashfunktions-Wertes auf eine gespeicherte Hashmaske mit einer Vielzahl von Bits, wobei ein vorbestimmtes oder vorbestimmte jener Bits derart gesetzt sind, daß sie einer oder mehreren Zieladressen entsprechen; und

Bestimmen, ob die Adresse die Netzstation identifiziert, gemäß folgenden Kriterien:

a) nur wenn die Hashmaske (16) ein Bit gesetzt hat, das der Netzadresse entspricht;

b) nur wenn ein Teil eines organisationsmäßig eindeutigen Identifizierers (OUI) der empfangenen Netzadresse derart bestimmt wird, daß er gleich einem ersten Wert ist, der aus "n" Bits einer CAM-Eintragsstelle besteht;

c) nur wenn der OUI-Teil der empfangenen Netzadresse derart bestimmt wird, gleich einer CAM-Eintragsstelle (24) zu sein, und wenn die Hashmaske ein Bit gesetzt hat, das der Netzadresse entspricht;

d) nur wenn die Netzadresse einschließlich des OUI-Teils derart bestimmt wird, daß sie gleich einer CAM-Eintragsstelle ist;

e) nur wenn die Netzadresse einschließlich des OUI-Teils derart bestimmt wird, daß sie gleich einer CAM-Eintragsstelle ist, oder wenn die Hashmaske ein Bit gesetzt hat, das der Netzadresse entspricht;

f) nur wenn die Netzadresse einschließlich des OUI-Teils derart bestimmt wird, daß sie gleich einer CAM-Eintragsstelle ist, oder wenn der OUI-Teil der empfangenen Netzadresse derart bestimmt wird, daß er gleich einer CAM-Eintragsstelle ist; und

g) nur wenn die Netzadresse einschließlich des OUI-Teils derart bestimmt wird, daß sie gleich einer CAM-Eintragsstelle ist, oder wenn der OUI-Teil der empfangenen Netzadresse derart bestimmt wird, daß er gleich einer CAM-Eintragsstelle ist, und wenn die Hashmaske auch ein Bit gesetzt hat, das der Netzadresse entspricht.

## Revendications

1. Appareil pour identifier une adresse reçue à partir d'un réseau de communication (1), comprenant :

des moyens (20) destinés à stocker l'adresse reçue;

des moyens formant mémoire adressable par le contenu (12) comportant des entrées (24) destinées à stocker une ou plusieurs adresses-cibles;

des moyens (26) destinés à comparer l'adresse reçue stockée ou au moins une partie de celle-ci avec la ou les adresses-cibles stockées ou des parties correspondantes de celles-ci, les moyens comparateurs comportant une sortie pour indiquer s'il existe une correspondance entre l'adresse reçue stockée ou une partie de celle-ci et l'une des adresses-cibles stockées, ou une partie correspondante de celle-ci;

des moyens (16) destinés à stocker un masque de hachage formé de plusieurs bits dont un ou des bits prédéterminés sont mis à 1 pour correspondre à une ou plusieurs adresses-cibles, les moyens de stockage de masque de hachage (16) comportant une entrée et également une sortie pour indiquer si une valeur appliquée à l'entrée est identifiée;

des moyens (22) destinés à générer une valeur de contrôle de redondance cyclique CRC ou une autre valeur ayant une fonction de hachage, correspondant à l'adresse reçue, une partie de la valeur CRC ou d'une autre valeur ayant une fonction de hachage étant appliquée à l'entrée des moyens de stockage de masque de hachage; et

des moyens de commande (32) destinés à sélectionner la sortie des moyens comparateurs et/ou la sortie des moyens de stockage de masque de hachage pour indiquer si l'adresse reçue stockée est égale une adresse-cible.

2. Appareil tel que défini dans la revendication 1 et comprenant également des moyens de comptage (18) reliés au réseau de communication pour compter un nombre de bits reçus à partir de celui-ci, les moyens de comptage comportant une sortie activée après la réception d'un nombre prédéterminé de bits, la sortie des moyens de comptage étant reliée aux moyens de commande pour permettre le fonctionnement de ceux-ci.

3. Appareil tel que défini dans la revendication 2, dans lequel le nombre prédéterminé de bits est égal à 56.

4. Appareil tel que défini dans la revendication 1 et comprenant également des moyens (28) reliés à une sortie des moyens générateurs de CRC (22) en vue de corriger celle-ci pour d'autres informations reçues à partir du réseau de communication, qui ne font pas partie de l'adresse.

5. Appareil tel que défini dans la revendication 4, dans lequel les moyens correcteurs (28) comprennent des moyens de stockage de données (28a) destinés à stocker plusieurs facteurs de correction, moyens de stockage qui comportent une sortie reliée à des moyens destinés à combiner un ou plusieurs des facteurs de correction les uns avec les autres afin de former un facteur de correction final destiné à être combiné avec la sortie desdits moyens générateurs de CRC.

6. Appareil tel que défini dans la revendication 5, dans lequel les moyens de stockage de données (28a) comportent neuf emplacements de stockage (0-8) dont chacun stocke la totalité ou un sous-ensemble des facteurs de correction suivants:

| 0 | BB-7E-75-34 |
|---|---|
| 1 | 2S-DO-EE-65 |
| 2 | 2D-DO-EE-65 |
| 3 | C8-24-F2-2F |
| 4 | E6-72-F7-CC |
| 5 | 73-39-7B-E6 |
| 6 | 39-9C-BD-F3 |
| 7 | 9E-AE-D0-22 |
| 8 | 4F-57-68-11 |

7. Appareil tel que défini dans la revendication 6, dans lequel lesdits moyens de combinaison comprennent une fonction logique OU exclusif.

8. Appareil tel que défini dans la revendication 1, dans lequel chacune des entrées (24) est divisée en trois zones, une première zone (24a) comportant 24 bits, une seconde zone (24b) comportant 23 bits, et une troisième zone (24c) comportant un seul bit, et dans lequel la troisième zone stocke un bit d'adresse indiquant si l'adresse de réseau est une adresse individuelle ou une adresse de groupe.

9. Méthode de filtrage d'adresses reçues à partir d'un réseau de communication (1) par une station de réseau, pour déterminer si une adresse reçue identifie la station de réseau, comprenant les étapes qui consistent à :

appliquer une adresse reçue à partir du réseau de communication à une mémoire adressable par le contenu CAM (12) comportant au moins une entrée (24) pour déterminer si la CAM comporte une adresse correspondante stockée dans ladite entrée;
comparer l'adresse reçue ou au moins une partie de celle-ci avec une ou plusieurs adresses-cibles ou des parties correspondantes de celles-ci stockées dans la mémoire adressable par le contenu (12) pour déterminer s'il existe une correspondance;
générer une valeur ayant une fonction de hachage, correspondant à l'adresse reçue et appliquer une partie de la valeur ayant une fonction de hachage à un masque de hachage stocké comprenant plusieurs bits dont un ou des bits prédéterminés sont mis à 1 pour correspondre à une ou plusieurs adresses-cibles; et
déterminer si l'adresse identifie la station de réseau en fonction de l'un des critères suivants :

a) seulement si le masque de hachage (16) comporte un bit mis à 1 qui correspond à l'adresse de réseau;
b) seulement s'il est déterminé qu'une partie d'identificateur unique en termes d'organisation (OUI) de l'adresse de réseau reçue est égale à une première valeur formée de "n" bits d'une entrée de la CAM;
c) seulement s'il est déterminé que la partie OUI de l'adresse de réseau reçue est égale à une entrée (24) de la CAM, et si le masque de hachage comporte un bit mis à 1 qui correspond à l'adresse de réseau;
d) seulement s'il est déterminé que l'adresse de réseau, y compris la partie OUI, est égale à une entrée de la CAM;
e) seulement s'il est déterminé que l'adresse de réseau, y compris la partie OUI, est égale à une entrée de la CAM, ou si le masque de hachage comporte un bit mis à 1 qui correspond à l'adresse de réseau;

f) seulement s'il est déterminé que l'adresse de réseau, y compris la partie OUI, est égale à une entrée de la CAM ou s'il est déterminé que la partie OUI de l'adresse de réseau reçue est égale à une entrée de la CAM; et

g) seulement s'il est déterminé que l'adresse de réseau, y compris la partie OUI, est égale à une entrée de la CAM, ou s'il est déterminé que la partie OUI de l'adresse de réseau reçue est égale à une entrée de la CAM et si le masque de hachage comporte également un bit mis à 1 qui correspond à l'adresse de réseau.

Fig. 1
(PRIOR ART)

→ ⟶ ⟶ ⟶ Physical Medium

BIT 15                                    0

| | | Word #1 |
|---|---|---|
| | | Word #2 |
| | | Word #3 |

FIG. 3

BIT 15                    8              0

| | OUI A | Word #1 |
|---|---|---|
| OUI B | | Word #2 |
| | | Word #3 |

FIG. 4

Fig. 2a

Fig. 2b
28